# FASCICULE DE BREVET EUROPEEN

(11) **EP 1 644 797 B1**
(45) Date de publication et mention de la délivrance du brevet: **11.12.2013**
(21) Numéro de dépôt: 04767590.5
(22) Date de dépôt: 06.07.2004
(51) Int. Cl.: G06F 21/00

(54) **PROCEDE DE SECURISATION DE L'EXECUTION D'UN PROGRAMME INFORMATIQUE, NOTAMMENT DANS UNE CARTE A MICROCIRCUIT**
VERFAHREN ZUR DURCHFÜHRUNG EINER SICHEREN AUSFÜHRUNG EINES COMPUTERPROGRAMMS INSBESONDERE IN EINER CHIPKARTE
METHOD FOR MAKING SECURE EXECUTION OF A COMPUTER PROGRAMME, IN PARTICULAR IN A SMART CARD

(30) Priorité: 11.07.2003 FR 0308550
(43) Date de publication de la demande: 12.04.2006
(73) Titulaire: OBERTHUR TECHNOLOGIES, 92700 Colombes (FR)
(72) Inventeur: FISCHER, Jean-Bernard, F-94270 Le Kremlin-Bicêtre (FR); THIEBEAULD DE LA CROUEE, Hugues, F-33600 Pessac (FR)
(74) Mandataire: Quantin, Bruno Marie Henri
(86) Numéro de dépôt international: PCT/FR2004/001755
(87) Numéro de publication internationale: WO 2005/008451

(56) Documents cités:
- DE-A- 19 944 991
- FR-A- 2 757 972
- US-A- 5 274 817

## Description

La présente invention se rapporte à un procédé de sécurisation de l'exécution d'un programme informatique et à une entité électronique sécurisée mettant en oeuvre un tel procédé.

L'invention peut notamment être utilisée pour sécuriser une carte à microcircuit (autrement appelée "carte à puce").

Dans la suite de ce document, on entendra par « sécurisation » d'un programme informatique :
- la détection d'attaques mal intentionnées visant à modifier le comportement normal d'un programme informatique ; mais aussi
- tout traitement visant à fiabiliser le déroulement d'un programme informatique, et notamment celui d'un programme s'exécutant dans un environnement très perturbé, comme un satellite, ou celui d'un programme informatique à forte exigence de fiabilité, comme, par exemple, un programme de contrôle d'un implant cardiaque.

Par ailleurs, on entendra par "programme informatique", tout programme, quel que soit le langage informatique et les moyens de mémorisation utilisés. Par exemple, et de façon non limitative, le programme informatique peut être écrit en langage machine, assembleur, C, C++, Java, VHDL. Le programme peut être mémorisé dans une mémoire permanente, par exemple dans une mémoire ROM ou EEPROM ou sur un disque dur, ou dans une mémoire volatile, par exemple de type RAM. Le programme peut être également matérialisé par un circuit intégré, par exemple de type FPGA ou par un circuit ASIC (Application Specific Integrated Circuit ).

La présente invention permet la détection d'une attaque destinée à modifier le déroulement de l'exécution d'un programme informatique s'exécutant sur une entité électronique sécurisée, par exemple une carte à microcircuit, une carte PCMIA sécurisée (par exemple une carte IBM4758), une clef USB ou un passeport intégrant une puce sans contact dans une de ses pages. Elle permet aussi le déclenchement d'une contre-mesure à cette attaque.

La présente invention permet, en particulier, de détecter des attaques par perturbation du fonctionnement d'une entité électronique, par exemple les attaques de type « attaques par génération de fautes » (en anglais "Fault Attack").

Ces attaques visent à modifier illicitement le contenu ou la lecture du contenu d'un registre, d'une mémoire ou d'un bus, ou à obliger un processeur à ne pas, ou mal, exécuter certaines instructions d'un programme informatique. Le programme informatique attaqué peut alors se dérouler d'une façon très différente de celle qui avait été prévue au moment de sa conception.

Ces attaques peuvent, entre autres et de façon connue, être effectuées :
- en générant un pic de tension à l'une des bornes d'alimentation du processeur ;
- en élevant brusquement sa température ;
- en changeant rapidement sa fréquence d'horloge ou sa tension d'alimentation ;
- en appliquant un flash de lumière, un rayon laser, ou un champ électromagnétique, sur une partie du silicium qui le compose.

Selon l'état actuel de la technique, l'homme du métier dispose de différents moyens pour sécuriser un programme informatique, et notamment pour lutter contre les attaques par génération de fautes dans une carte à microcircuit.

Une première méthode consiste à installer, dans les composants des cartes à microcircuit, des capteurs qui permettent de détecter de telles attaques.

L'efficacité d'une telle méthode est néanmoins restreinte car il est en pratique impossible de mettre des capteurs sur toute la surface de ce composant. Par ailleurs ces capteurs étant également composés de silicium, il est également possible de les perturber ou de modifier les informations qu'ils transmettent.

Un deuxième procédé de sécurisation connu et mis en oeuvre dans la plupart des systèmes d'exploitation des cartes à microcircuit repose sur l'utilisation de "sémaphore". Un tel procédé comporte :
- une étape de modification du contenu d'une zone mémoire durant l'exécution d'un ensemble d'instructions critiques ; et
- une étape de vérification au cours de laquelle on vérifie, en lisant le contenu de la zone mémoire précitée, que l'étape de modification précitée à été réalisée.

Si la zone mémoire n'a pas été modifiée, cela signifie que l'étape de modification n'a pas été effectuée, et que, par conséquent, les instructions critiques précitées n'ont pas été correctement exécutées.

On notera que le terme "sémaphore" fait référence dans le présent document à une notion différente de celle connue dans le domaine de la programmation des processus concurrents, et qui porte néanmoins le même nom.

Cette deuxième méthode dont la mise en oeuvre s'effectue par logiciel ne présente pas les inconvénients de la première méthode précitée.

Néanmoins, et de façon connue, les sémaphores sont traditionnellement implémentés par des variables résidant en mémoire de travail (RAM) et leur manipulation (positionnement, lecture) est relativement lente ou coûteuse en espace mémoire. Cette contrainte est particulièrement pénalisante lorsque le programme s'exécute sur des systèmes disposant de ressources limitées (mémoire, puissance de calcul, ...) tels que des cartes à puce.

Une troisième méthode est décrite dans le brevet américain US 5,274,817. Le procédé inclut la mémorisation d'un mot de signature sur la pile, le mot de signature correspondant à un code d'adresse d'entrée dans la mémoire pour le sous-programme, stocker une adresse de retour sur la pile, le code d'adresse de retour correspondant à un emplacement de mémoire où le contrôle doit être passée après l'exécution de la sous-routine, passer le contrôle à l'adresse d'entrée sous-routine, l'exécution de la sous-routine, comparer le mot de signature stockée dans la pile avec le sous-programme de code d'adresse d'entrée, passant la main à l'adresse de retour, si les valeurs comparées sont égales et l'exécution d'une interruption logicielle si les valeurs comparées ne sont pas égaux.

La présente invention vise une méthode de sécurisation logicielle ne présentant pas les inconvénients précédents.

A cet effet, elle concerne un procédé de sécurisation de l'exécution d'un programme informatique, ce procédé comportant:
o une étape d'empilement d'une valeur prédéterminée dans une pile d'instructions du programme, ladite valeur prédéterminée étant l'adresse d'une fonction de traitement d'une anomalie ;
o lors de l'exécution normale du programme, une étape de suppression de ladite valeur prédéterminée de la pile d'instruction, sans exécution de la fonction de traitement d'une anomalie et
o une étape de dépilement de ladite pile, au cours de laquelle, si ladite valeur prédéterminée est dépilée, la fonction de traitement d'une anomalie est exécutée.

On rappellera ici qu'une pile d'instructions est une zone de la mémoire pour conserver provisoirement des données. Les valeurs sont empilées dans la pile et dépilées aux moyens- de deux instructions spécifiques, respectivement appelées PUSH et POP dans la-suite de la description.

Ces instructions ne manipulent que des valeurs de taille fixe, par exemple d'un octet.

L'utilisation de la pile suit un algorithme de type LIFO ("Last In First Out").

De façon connue, elle mémorise, en particulier, l'adresse de retour d'une procédure (instruction RET en assembleur 80x86, par exemple).

Le procédé de sécurisation selon l'invention utilise donc la pile d'exécution pour mémoriser une valeur permettant la détection d'une anomalie d'exécution.

Une pile d'exécution étant, d'une part d'accès rapide en lecture et écriture et, d'autre part, peu coûteuse en espace mémoire, le procédé de sécurisation selon l'invention est particulièrement adapté pour sécuriser des programmes informatiques s'exécutant sur des systèmes disposant de ressources limitées.

Cette utilisation nouvelle de la pile d'instructions présente d'autres avantages qui seront décrits ultérieurement.

Dans un mode préféré de réalisation, les étapes d'empilement et de dépilement sont respectivement associées à des éléments d'au moins un sous-ensemble d'instructions dudit programme.

Par exemple, l'étape d'empilement peut être associée à l'instruction "open(fichier)" d'ouverture d'un fichier et l'étape de dépilement à l'instruction "close(fichier)" de fermeture de ce fichier.

Cette caractéristique est particulièrement avantageuse, car elle permet d'automatiser l'écriture des instructions de sécurisation, en associant, par exemple à l'aide d'un éditeur, les opérations d'empilement et de dépilement aux éléments précités, à savoir dans l'exemple précédent, les instructions "open" et "close".

Selon une première variante de ce mode préféré de réalisation, les, éléments du sous-ensemble d'instructions sont respectivement une parenthèse ouvrante et une parenthèse fermante d'un système de parenthèses.

On rappelle à cet effet, qu'en théorie-des langages, et de façon connue par l'homme du métier des langages informatiques, on dit que l'on se trouve en présense d'un système de parenthèses lorsqu'un texte comporte autant de parenthèses ouvrantes que de parenthèses fermantes et que tout début de ce texte contient un nombre de parenthèses ouvrantes supérieur ou égal au nombre de parenthèses fermantes.

Selon cette caractéristique particulièrement avantageuse, les étapes d'empilement et de dépilement peuvent respectivement être associées aux instructions :
- "(" et ")" ; ou
- "{" et "}" ;ou
- "begin" et "end" ; ou
- "repeat" et "until".

Dans une autre variante de ce mode préféré de réalisation, l'étape de dépilement est associée à une instruction de retour d'exécution du programme ou d'un sous-programme de ce programme.

Cette caractéristique permet avantageusement d'utiliser les opérations normales de dépilement effectuées traditionnellement au retour d'un programme ou d'un sous programme (lors de l'exécution de l'instruction return) pour détecter une anomalie d'exécution, si les valeurs dépilées à cette occasion ne correspondent pas à celles qui auraient dû être dépilées an cas d'exécution normale du programme.

Selon une autre caractéristique, le programme est dans un langage de programmation qui comporte une première instruction dont l'exécution met en oeuvre l'étape d'empilement et/ou une deuxième instruction dont l'exécution met en oeuvre ladite étape de dépilement.

Dans ce mode de réalisation, des instructions nouvelles sont intégrées au langage de programmation, ces instructions ayant chacune une fonction propre et, soit une fonction d'empilement, soit une fonction de dépilement en vue de la sécurisation du programme.

Pour reprendre l'exemple brièvement -introduit --ci-dessus, une nouvelle instruction baptisée "open(fchier)", peut être -créée, cette nouvelle instruction permettant à la fois l'ouverture du fichier et l'empilement d'une valeur prédéterminée dans la pile d'instructions du programme.

Ainsi, le programmateur est assuré que des fonctions de sécurisation sont mises en oeuvre à chaque ouverture de fichier, sans même qu'il ait besoin de s'en occuper et sans qu'un outil logiciel particulier soit nécessaire.

Préférentiellement, la deuxième instruction termine le programme ou un sous-programme de ce programme.

Ce mode de réalisation présente les mêmes avantages que le mode de réalisation introduit précédemment et dans lequel les instructions d'empilement et de dépilement sont associées, et non pas intégrées, à des éléments d'un sous-ensemble d'instructions du programme. En conséquence, il ne sera pas décrit en détails ci-après.

Dans un mode préféré de réalisation, la valeur prédéterminée est représentative d'un sous-ensemble d'instructions critiques du programme.

Cette caractéristique est particulièrement avantageuse lorsque le procédé de sécurisation est utilisé pour sécuriser plusieurs sous-ensembles d'instructions du programme.

Elle permet de détecter, au cours de l'étape de dépilement, qu'un sous-ensemble d'instructions particulier a été exécuté correctement, et non pas un autre sous-ensemble d'instructions dont l'exécution aurait entraîné l'empilement d'une autre valeur prédéterminée.

L'homme du métier comprendra aisément que cette caractéristique peut être utilisée pour sécuriser différentes branches d'un test (du type, "if", "then", "else" en langage C), une valeur prédéterminée différente étant empilée dans chacune des branches, et l'étape de dépilement étant effectuée à la fin de ce test.

Lorsque le programme fait appel à un sous-programme, cette caractéristique permet aussi de s'assurer, pendant l'exécution de ce sous-programme, que l'on est entré dans ce sous-programme suite à cet appel et non pas suite à une attaque par génération de fautes.

Deux exemples de mise en oeuvre de cette caractéristique seront détaillés ultérieurement en référence aux annexes A et C.

Selon une autre caractéristique, le procédé de sécurisation selon l'invention comporte une étape de traitement d'anomalie, mise en oeuvre, si, au cours de l'étape de dépilement, on dépile une valeur différente de la valeur prédéterminée.

Cette caractéristique permet avantageusement de mettre en oeuvre l'étape de traitement d'anomalie, dés qu'une attaque a eu pour conséquence de modifier l'exécution normale du programme et notamment l'appel ou le retour d'exécution d'une fonction de ce programme. Ce procédé de sécurisation est alors particulièrement efficace.

Le traitement de l'anomalie peut par exemple, dans le cas de l'utilisation du procédé de sécurisation dans une carte à microcircuit, consister à rendre la carte inopérante, par destruction du système d'exploitation de cette carte.

Trois exemples de mise en oeuvre de cette caractéristique seront détaillés ultérieurement en référence aux annexes A, C et D qui concernent des modes de réalisation qui ne sont pas couverts par les revendications mais sont utiles à la compréhension de l'invention.

Dans un mode de réalisation particulier dans lequel le programme comporte au moins un appel à un sous-programme, l'étape d'empilement est effectuée avant cet appel, et la valeur prédéterminée supprimée de la pile pendant l'exécution de ce sous-programme.

Cette caractéristique permet ainsi de contrôler que le sous-programme a effectivement été exécuté et correctement exécuté

En effet, si l'appel à ce sous-programme a été sauté, ou si l'étape de dépilement n'a pas été effectuée, la pile d'instructions conservera la valeur prédéterminée empilée.

Le dépitement ultérieur de cette valeur entraînera la détection de l'anomalie d'exécution, comme explicité infra en référence aux annexes B et C.

Dans ce mode de réalisation particulier, la valeur prédéterminée peut avantageusement être l'adresse d'une fonction de traitement d'une anomalie.

Ainsi, si le valeur prédéterminée n'est pas dépilée pendant l'exécution du sous-programme, par exemple suite à une attaque-ayant pour conséquence la non exécution de ce sous-programme, le dépilement ultérieur par le processeur de cette valeur entraînera, la mise en oeuvre de cette fonction de traitement. Un exemple sera détaillé ultérieurement à l'annexe B.

Cette caractéristique permet de déclencher la fonction de traitement si le programme subit une attaque quelconque dont la conséquence est d'éviter l'exécution du sous-programme. Elle est donc particulièrement utile pour sécuriser des fonctions critiques, par exemple une procédure d'authentification.

Dans un autre mode de réalisation particulier dans lequel le programme comporte au moins un appel à un sous-programme, l'étape d'empilement est effectuée pendant l'exécution du sous-programme, et la valeur prédéterminée supprimée après exécution de ce sous-programme.

Cette caractéristique permet ainsi de contrôler que le retour de ce sous-programme s'effectue correctement.

En effet, si le retour de ce sous-programme a été perturbé, la pile d'instructions conservera la valeur prédéterminée empilée.

Ce mode de réalisation particulier sera détaillé en référence à l'annexe D.

Dans cet autre mode de réalisation particulier, la valeur prédéterminée peut avantageusement être l'adresse d'une fonction de traitement d'une anomalie.

Pour les raisons évoquées précédemment, cette caractéristique permet de déclencher la fonction de traitement si le programme subit une attaque quelconque dont la conséquence est d'éviter l'exécution du sous-programme. Elle est donc particulièrement utile pour sécuriser des fonctions critiques, par exemple une procédure d'authentification.

Un exemple de mise en oeuvre de cette caractéristique sera donné en référence à l'annexe E.

L'invention vise aussi un support d'informations lisible par un système- informatique, éventuellement totalement ou partiellement amovible, notamment- CD-ROM ou support magnétique, tel un disque dur ou une disquette, ou support transmissible tel un signal électrique ou optique, ce support d'informations comportant des instructions d'un programme informatique permettant la mise ne oeuvre d'un procédé de sécurisation tel que décrit brièvement ci-dessus, lorsque ce programme est chargé et exécuté par un système informatique.

L'invention vise également un programme d'ordinateur stocké sur un support d'informations, ce programme comportant des instructions permettant la mise en oeuvre d'un procédé de sécurisation tel que décrit brièvement ci-dessus, lorsque ce programme est chargé et exécuté par un système informatique.

L'invention vise également une entité électronique sécurisée et une carte à microcircuit comportant des moyens de mise en oeuvre d'un procédé de sécurisation tel que décrit brièvement ci-dessus.

Les avantages et caractéristiques particulières propres aux support d'information, au programme d'ordinateur et à la carte à microcircuit étant les mêmes que ceux exposés ci-dessus concernant le procédé de sécurisation selon l'invention, ils ne seront pas rappelés ici.

D'autres aspects et avantages de la présente invention apparaîtront plus clairement à la lecture de la description de modes particuliers de réalisation qui va suivre, cette description étant donnée uniquement à titre d'exemple non limitatif et faite en référence aux annexes A à E qui comportent cinq exemples de programmes informatiques sécurisés conformément à l'invention.

Ces programmes sont écrits en langage C et en assembleur 80c51. Afin d'en faciliter la description, chaque ligne est précédée d'un commentaire compris entre les chaînes de caractères "/*" et "*/".

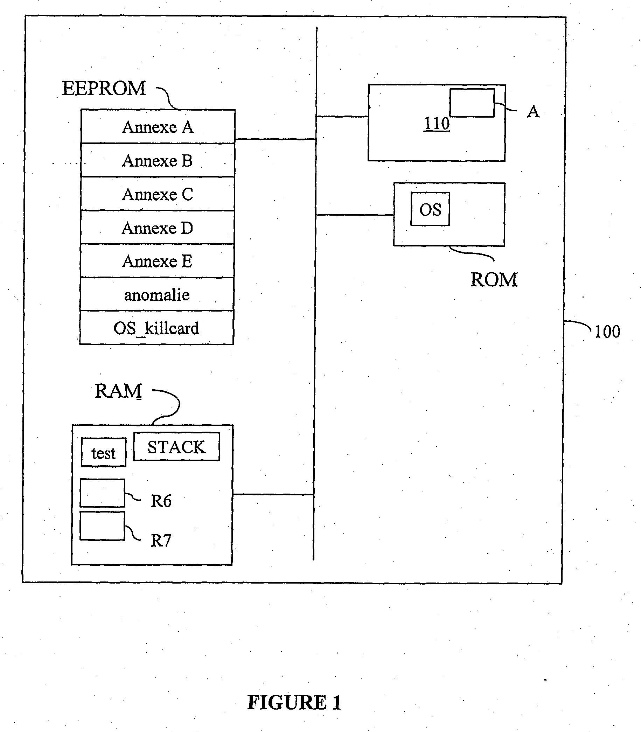

La description d'une carte à microcircuit conforme à l'invention dans un mode préféré de réalisation sera effectuée en référence à la figure 1.

L'**annexe A** comporte 33 lignes d'instructions numérotées /*a1*/ à /*a33*/ d'un programme informatique dont l'exécution est sécurisée par un procédé de sécurisation conforme à l'invention dans un mode préféré de réalisation

La ligne /*a1*/ n'est pas une instruction à proprement parler. Elle symbolise le fait que le programme de l'annexe A peut contenir un certain nombre d'instructions, en lieu et place de la chaîne de caractères "...", en plus des instructions servant à la sécurisation de ce programme. Elle représente un ensemble d'instructions sans rapport avec la présente invention.

La ligne /*a2*/ comporte une directive #pragma asm, indiquant au compilateur que les lignes d'instructions qui suivent sont en assembleur 80c51.

La ligne /*a3*/ comporte une instruction dont l'exécution met en oeuvre une étape d'empilement de la valeur prédéterminée 0 (en notation hexadécimale) dans la pile d'instructions du programme de l'annexe A. Pour simplifier, on dira par la suite qu'on empile la valeur 0 à la ligne /*a3*/.

Puis, on empile la valeur 1 à la ligne /*a4*/.

Dans le mode préféré de réalisation décrit ici, les valeurs prédéterminées 00h et 01 h représentent respectivement les octets de poids fort et de poids faible de la valeur 1 (en notation hexadécimale) codée sur 2 octets.

La ligne /*a5*/ comporte une directive #pragma endasm, indiquant au compilateur que les lignes d'instructions qui suivent ne sont plus en assembleur 80c51, mais en langage C.

Les lignes /*a6*/ et /*a7*/ similaires à la ligne /*a1*/ précédemment décrite, représentent un ensemble d'instructions sans rapport avec la présente invention.

La ligne /*a8*/ comporte une instruction au cours de laquelle on teste si le contenu de la variable "test" est égal à "VRAI". De façon connue, si tel est le cas au moment de l'exécution du programme de l'annexe A, le processeur exécutera les instructions /*a9*/ à /*a23*/ suite au test de la ligne /*a8*/.

Sinon, il exécutera directement l'instruction de la ligne /*a24*/.

La ligne /*a9*/ est identique à la ligne /*a2*/ précédemment décrite.

Les lignes /*a10*/ et /*a11*/ sont similaires aux lignes /*a3*/ et /*a4*/déjà décrites. Elles permettent d'empiler -en -deux-temps la-valeur 1 (en notation hexadécimale) codée sur deux octets.

La ligne /*a12*/ est identique à la ligne /*a5*/ précédemment décrite.

Les lignes /*a13*/ et /*a14*/ similaires à la ligne /*a1*/ précédemment décrite, représentent un ensemble d'instructions sans rapport avec la présente invention. Ces instructions peuvent bien entendu manipuler la pile d'instructions, à condition de laisser cette pile d'instructions, à l'issue de la ligne /*a14*/ dans l'état où elle se trouvait avant l'instruction /*a13*/.

La ligne /*a15*/ est identique à la ligne /*a2*/ précédemment décrite.

La ligne /*a16*/ comporte une instruction dont l'exécution met en oeuvre une étape de dépilement de la pile d'instructions, la valeur dépilée étant mémorisée dans un registre A. Pour simplifier, on dira par la suite qu'on dépile dans le registre A à la ligne /*a16*/.

A l'issue de l'instruction /*a16*/, le registre A mémorise en conséquence la dernière valeur empilée dans la pile, celle-ci fonctionnant selon -un mécanisme LIFO.

La ligne /*a17*/ comporte une instruction permettant de comparer le contenu du registre A avec la valeur 02H. Normalement, si le programme n'a pas subi d'attaque lors de son exécution depuis la fin de l'instruction de la ligne /*a11*/, le contenu du registre A contient la valeur 02H empilée au cours de l'instruction de la ligne /*a11*/.

L'étape de dépilement de la ligne /*a16*/ permet ainsi la détection d'une anomalie d'exécution, conformément à la présente invention.

Si, au cours de l'étape de comparaison de la ligne /*a17*/ on trouve que la valeur du registre A est différente de la valeur 02H, le programme de l'annexe A se branche à l'adresse "anomalie" au cours de l'instruction de la ligne /*a18*/.

Cette adresse "anomalie" est, dans le mode de réalisation décrit ici, l'adresse d'une étape de traitement d'anomalie du procédé de -sécurisation selon l'invention. Dans la pratique, l'adresse "anomalie" est une adresse en notation hexadécimale directement interprétable par lé processeur.

En revanche, si, au cours de l'étape de comparaison de la ligne /*a17*/ on trouve que le registre A mémorise la valeur 02H, le programme de l'annexe A exécute l'instruction de la ligne /*a19*/.

Les lignes /*a19*/ à /*a21*/ sont des lignes similaires aux lignes /*a16*/ à /*a18*/ précédemment décrites :
- dépilement dans le registre A à la ligne /*a19*/ ;
- comparaison du registre A, avec la valeur 00H à la ligne /*a20*/, la valeur 00H correspondant à la valeur prédéterminée empilée à la ligne /*a10*/ ; et
- branchement à l'adresse "anomalie" au cours de l'instruction de la ligne /*a21*/ si le registre A ne contient pas la valeur 00H au moment de l'exécution de l'instruction de la ligne /*a20*/.

En revanche, si le registre A contient la valeur 00H, le programme exécute l'instruction de la ligne /*a22*/ identique à la ligne /*a5*/ précédemment décrite.

Les lignes /*a24*/ et /*a25*/ similaires à la ligne /*a1*/ précédemment décrite, représentent un ensemble d'instructions sans rapport avec la présente invention.

Les lignes /*a26*/ à /*a33*/ sont des lignes similaires aux lignes /*a15*/ à /*a22*/ précédemment décrites :

Elles comportent des étapes /*a28*/ et /*a30*/ de dépilement permettant de détecter une anomalie d'exécution du programme si la pile a été corrompue et qu'elle ne contient pas, juste avant l'exécution de l'instruction de la ligne /*a27*/ les valeurs prédéterminées 01 H et 00H empilées respectivement aux lignes /*a4*/ et /*a3*1.

En conclusion, les deux sous-ensembles d'instructions, respectivement constitués par les lignes /*a6*/ à /*a25*/ et /*a13*/ à /*a14*/ sont sécurisés.

Le sous-ensemble d'instructions constitué par les lignes /*a6*/ et /*a25*/ est sécurisé grâce:
- à l'étape d'empilement (lignes /*a3*/ et /*a4*/) de la valeur prédéterminée 1 codée sur 2 octets ; et
- à l'étape de dépilement des lignes /*a27*/ et /*a30*/.

De même, le sous-ensemble d'instructions constitué par les lignes /*a13*/ et /*a14*/ est sécurisé grâce :
- à l'étape d'empilement (lignes /*a10*/ et /*a11*/) de la valeur prédéterminée 2 codée sur 2 octets ; et
- à l'étape de dépilement des lignes /*a16*/ et /*a19*/.

Cette implémentation n'est nullement limitative, les valeurs prédéterminées 1 et 2 auraient aussi pu être identiques ou choisies de façon aléatoire.

L'**annexe B** comporte 28 lignes d'instructions numérotées /*b1*/ à /*b28*/ d'un programme informatique dont l'exécution est sécurisée par un procédé de sécurisation conforme à l'invention dans un mode préféré de réalisation.

Les lignes /*b1*/ et /*b2*/ constituent les deux premières lignes de déclaration de la fonction "function" en langage C, cette fonction ne comportant ni paramètre d'entrée ni valeur de retour. La ligne /*b11*/ comporte la dernière instruction de la déclaration de cette fonction.

La ligne /*b3*/ similaire à la ligne /*a1*/ précédemment décrite en référence à l'annexe A, représente un ensemble d'instructions sans rapport avec la présente invention.

La ligne /*b4*/ est identique à la ligne /*a2*/ précédemment décrite en référence à l'annexe A.

Au cours des instructions des lignes /*b5*/ et /*b6*/, on effectue, en deux temps, une étape d'empilement d'une valeur prédéterminée codée sur deux octets, cette valeur prédéterminée étant, dans ce mode préféré de réalisation l'adresse d'une fonction OS_killcard de traitement d'une anomalie. Dans la pratique, l'adresse "OS_killcard" est une adresse en notation hexadécimale directement interprétable par le processeur.

Dans le cas de l'utilisation du procédé de sécurisation dans une carte à microcircuit, la fonction OS_killcard peut par exemple inhiber le fonctionnement de la carte destruction de son système d'exploitation.

La ligne /*b7*/ est identique à la ligne /*a5*/ précédemment décrite en référence à l'annexe A.

La ligne /*b8*/ similaire à la ligne /*a1*/ précédemment décrite en référence à l'annexe A, représente un ensemble d'instructions sans rapport avec la présente invention.

La ligne /*b9*/ comporte une instruction d'appel à une fonction critique "fonction_critique", -dont le code sera décrit en référence aux lignes /*b12*/ à /*b28*/.

De façon connue, l'appel à un sous-programme entraîne automatiquement l'empilement de l'adresse de retour de ce sous-programme dans la pile d'instructions. Cette adresse de retour, codée sur 2 octets, occupe donc deux registres de la pile. Dans l'exemple décrit ici, cette adresse correspond à l'adresse de l'instruction de la ligne /*b10*/, cette ligne devant être exécutée au retour de la fonction "fonction_critique".

Les lignes /*b12*/ et /*b13*/ d'une part et /*b28*/ d'autre part constituent les deux premières lignes et-la dernière-ligne de déclaration de la fonction "fonction_critique", cette fonction ne comportant ni paramètre d'entrée ni valeur de retour.

Après l'exécution des instructions des lignes /*b12*/ et /*b13*/, les quatre dernières valeurs empilées dans la pile d'instructions sont, dans l'ordre chronologique :
- l'octet de poids fort de l'adresse de la fonction OS_killcard (ligne /*b5*/) ;
- l'octet de poids faible de l'adresse de la fonction OS_killcard (ligne /*b6*/) ;
- l'octet de poids fort de l'adresse de la première instruction de la ligne /*b10*/ ; et
- l'octet de poids faible de l'adresse de la première instruction de la ligne /*b10*/.

La ligne /*b14*/ similaire à la ligne /*a1*/ précédemment décrite en référence à l'annexe A, représente un ensemble d'instructions sans rapport avec la présente invention.

De même que décrit précédemment en référence aux lignes /*a13*/ et /*a14*/ de l'annexe A, on supposera que ces instructions laissent la pile d'instructions, dans l'état où elle se trouvait avant l'instruction /*b14*/.

La ligne /*b15*/ est identique à la ligne /*a2*/ précédemment décrite en référence à l'annexe A.

A la ligne /*b16*/, on dépile-la pile d'instructions dans le registre A, le contenu de ce registre A étant ensuite sauvegardé dans un registre R7 à l'étape /*b17*/.

De même, à la ligne /*b18*/, on dépile à nouveau la pile d'instructions dans le registre A, le contenu de ce registre A étant sauvegardé dans un registre R6 à l'étape /*b19*/.

Avec ce qui a été dit précédemment, et en cas d'exécution normale du programme de l'annexe B, les registres R6 et R7 contiennent donc respectivement, à l'issue de l'exécution de l'instruction de la ligne /*b19*/ :
- l'octet de--poids fort de l'adresse de la première instruction de la ligne /*b10*/ ; et
- l'octet de poids faible de l'adresse de la première instruction de la ligne /*b10*/.

Ensuite, on dépile deux fois dans le registre A, la pile d'instructions aux lignes /*b20*/ et /*b21*/, ce qui revient, en cas d'exécution normale du programme de l'annexe B, à supprimer l'adresse sur deux octets de la fonction OS_killcard de la pile d'instructions pendant l'exécution du sous-programme "fonction_critique".

A la ligne /*b22*/, on mémorise dans le registre A, le contenu du registre R6, à savoir l'octet de poids fort de la première instruction de la ligne /*b10*/, cette valeur étant empilée dans la pile d'instructions à l'étape de la ligne /*b23*/.

De façon identique, on empile l'octet de poids faible de la première instruction de la ligne /*b10*/, cet octet étant mémorisé dans le registre R7, aux lignes /*b24*/ et /*b25*/. - La ligne /*b26*/ est identique à la ligne /*à5*/ précédemment décrite en référence à l'annexe A.

La ligne /*b27*/ similaire à la ligne /*a1*/ précédemment décrite en référence à l'annexe A, représente un ensemble d'instructions sans rapport avec la présente invention.

La ligne /*b28*/ est la dernière ligne du sous-programme "fonction_critique". De façon connue, elle se traduit en assembleur par une instruction de type "RETURN" ou "RET" dont l'exécution entraîne le saut du programme à l'adresse mémorisée dans les deux premiers registres de la pile d'instruction.

S'il ne subit pas d'attaque lors de son exécution, le programme se branche donc à la première instruction de la ligne /*b10*/, l'adresse de cette instruction ayant été empilée aux lignes /*b23*/ et /*b25*/

La ligne /*b10*/ similaire à la ligne /*a1*/ précédemment décrite en référence à l'annexe A, représente un ensemble d'instructions sans rapport avec la présente invention.

La ligne /*b11*/ termine la fonction "function".

En conclusion, dans le mode de réalisation particulier de l'annexe B, l'étape d'empilement de l'adresse de la fonction OS_killcard est effectuée avant l'appel au sous-programme "fonction_critique", cette adresse étant supprimée de la pile pendant l'exécution de ce sous-programme, aux lignes /*b20*/ et /b21*/

Ce mode de réalisation permet ainsi de contrôler que le sous-programme "fonction_critique" a été effectivement exécuté.

Par exemple, si l'appel à ce sous-programme a été perturbé, ou, plus généralement, si l'étape de dépilement n'a pas été effectuée, la pile d'instructions conservera la valeur de la fonction OS_killcard, le dépilement ultérieur de cette valeur, par exemple lors d'une instruction de retour d'exécution, entraînant la détection de cette anomalie d'exécution, et l'exécution de la fonction OS_killcard de traitement d'une anomalie.

L'annexe C comporte 32 lignes d'instructions numérotées /*c1*/ à /*c32*/ d'un programme informatique dont l'exécution est sécurisée par un procedé de sécurisation conforme à l'invention dans un mode préféré de réalisation.

Les lignes /*c1*/ à /*c11*/ sont similaires aux lignes /*b1*/ à /*b11*/ décrites en référence à l'annexe B, à la différence près que l'on empile dans la pile d'instruction, la valeur prédéterminée 05F1H codée en hexadécimal sur deux octets, au lieu de l'adresse de la fonction OS_killcard (lignes /*c5*/ et /*c6*/).

Cette étape d'empilement est là aussi effectuée avant l'appel au sous-programme fonction_critique.

Dans ce mode de réalisation particulier, cette valeur prédéterminée 05F1H est représentative du sous-ensemble constitué par les instructions des lignes /*c12*/ à /*c19*/.

Les lignes /*c12*/ à /*c19*/ sont similaires aux lignes /*b12*/ à /*b19*/ décrites en référence à l'annexe B.

En cas d'exécution normale du programme de l'annexe C, les registres R6 et R7 contiennent donc respectivement, à l'issue de l'exécution de l'instruction de la ligne /*c19*/, l'octet de poids fort et l'octet de poids faible de l'adresse de la première instruction de la ligne /*c10*/ correspondant à l'adresse de retour de la fonction "fonction_critique".

On dépile ensuite la pile d'instructions dans le registre A à la ligne /*c20*/, le contenu de ce registre étant ensuite comparé avec la valeur hexadécimale F1H à la ligne /*c21*/.

Normalement, si le programme n'a pas subi d'attaque, notamment au moment de l'appel à la fonction "fonction_critique", le registre A contient la valeur F1H empilée au cours de l'instruction de la ligne /*c5*/.

L'étape de dépilement de la ligne /*c20*/ permet ainsi la détection d'une anomalie d'exécution, conformément à la présente invention.

Si, au cours de l'étape de comparaison de la ligne /*c21*/ on trouve que la valeur du registre A est différente de la valeur F1H, le programme de l'annexe C se branche à l'adresse "OS_killcard" au cours de l'instruction de la ligne /*c22*/. Cela peut notamment se produire à-la suite-d'une attaque par génération de faute qui entraînerait l'exécution de la fonction "fonction_critique" sans qu'elle ait été appelée.

Dans ce mode de réalisation du procédé de sécurisation selon l'invention, le programme de traitement d'anomalie OS-killcard est donc mis en oeuvre, si, au cours de l'étape de dépilement de l'instruction /*c20*/, on dépile une valeur différente de la valeur prédéterminée F1H empilée à l'instruction /*c6*/.

En revanche, si, au cours de l'étape de comparaison de la ligne /*c21*/ on trouve que le registre A mémorise la valeur F1H, le programme de l'annexe C exécute l'instruction de la ligne /*c23*/.

Les lignes /*c23*/ à /*c25*/ sont des lignes similaires aux lignes /*c20*/ à /*c22*/ précédemment décrites :
- dépilement dans le registre A à la ligne /*c23*/ ;
- comparaison du registre A, avec la valeur 05H à la ligne /*c24*/, la valeur 05H étant la valeur prédéterminée empilée à la ligne /*c5*/ ; et
- branchement à l'adresse "OS_killcard" au cours de l'instruction de la ligne /*c25*/ si le registre A ne contient pas la valeur 05H au moment de l'exécution de l'instruction de la ligne /*c25*/.

En revanche, si le registre A contient la valeur 05H, le programme exécute l'instruction de la ligne /*c26*/.

Quoiqu'il en soit, l'exécution des instructions des lignes /*c20*/ et /*o23*/ supprime la valeur prédéterminée 05F1H de la pile d'exécution.

Les lignes /*c26*/ à /*c29*/ sont similaires aux lignes /*b22*/ à /*b25*/ précédemment décrites en référence à l'annexe B.

Elles permettent d'empiler dans la pile d'instructions les valeurs mémorisées dans les registres R6 et R7 lors de l'exécution des instructions des lignes /*c17*/ et /*c19*/, à savoir respectivement :
- l'octet de poids fort de l'adresse de la première instruction de la ligne/*c10*/; et
- l'octet de poids faible de l'adresse de la première instruction de la ligne /*c10*/.

Les lignes /*c30*/ à /*c32*/ sont similaires aux lignes /*b26*/ à /*b28*/ précédemment décrites en référence à l'annexe B.

S'il n'y a pas eu d'attaque, le programme se branche donc à la première instruction de la ligne /*c10*/, l'adresse de cette instruction ayant été empilée aux lignes /*c27*/ et /*c29*/

La ligne /*c10*/ similaire à la ligne /*a1*/ précédemment décrite en référence à l'annexe A, représente un ensemble d'instructions sans rapport avec la présente invention, et la ligne /*c11*/ termine la fonction "function1" de l'annexe C.

Dans ce mode de réalisation, la valeur 05F1H aurait pu être l'adresse d'une fonction de traitement d'anomalie. Ce mode particulier de réalisation permet de renforcer la sécurisation du programme, car même si une attaque se produit au cours de l'exécution du test des lignes /*c20*/ à /*c25*/, cette attaque serait détectée par la mise en oeuvre ultérieure de cette fonction de traitement d'anomalie.

En variante, plusieurs adresses de fonctions de traitement d'anomalie peuvent être utilisées, chacune d'entre elles étant une valeur prédéterminée associée à un ensemble d'instructions critiques.

**L'annexe D** comporte 32 lignes d'instructions numérotées /*d1*/ à /*d32*/ d'un programme informatique dont l'exécution est sécurisée par un procédé de sécurisation conforme à l'invention dans un mode préféré de réalisation.

Dans ce mode de réalisation particulier, le programme comporte, à la ligne /*d4*/, un appel à un sous-programme "fonction_critique".

Cet appel entraîne automatiquement l'empilement de l'adresse de retour de ce sous-programme, à savoir l'adresse de l'instruction de la ligne /*d5*/.

Au cours des instructions des lignes /*d20*/ à /*d23*/ du sous-programme "fonction_critique", on mémorise dans les registres R6 et R7 les premières valeurs de la pile d'instructions, à savoir -l'adresse-de retour, codée sur deux octets, de ce sous-programme. Puis, on empile la valeur prédéterminée 05F1H aux lignes /*d24*/ et /*d25*/.

On notera que dans ce mode de réalisation, cette étape d'empilement est effectuée pendant l'exécution du sous-programme "fonction_critique".

Enfin, on empile, au cours de l'exécution des instructions des lignes /*d27*/ et /*d29*/, le contenu des registres R6 et R7, ces registres contenant l'adresse de l'instruction de la ligne /*d5*/, comme expliqué supra.

Le programme de l'annexe D se branche donc à la ligne /*d5*/ à l'issue du sous-programme "fonction_critique".

Avant l'exécution de l'instruction de la ligne /*d5*/, les deux premières valeurs de la pile d'instructions sont normalement les valeurs prédéterminées 05H et F1H empilées aux lignes /*d24*/ et /*d25*/.

La ligne /*d5*/ similaire à la ligne /*a1*/ précédemment décrite en référence à l'annexe A, représente un ensemble d'instructions sans rapport avec la présente invention. On supposera que ces instructions laissent la pile d'instructions, dans l'état où elle se trouvait avant la ligne /*d5*/.

Les lignes /*d7*/ à /*d12*/ sont similaires aux lignes /*c20*/ à /*c25*/ décrites précédemment en référence à l'annexe C :
- dépilement dans le registre A aux lignes /*d7*/ et /*d10*/;
- comparaison du registre A, avec les valeurs prédéterminées F1 H et 05H aux lignes /*d8*/ et /*d11*/ ;
- branchement à l'adresse "OS_killcard" au cours de l'instruction /*d9*/ (respectivement /*d12*/) si le registre A ne contient pas la valeur F1H (respectivement 05H) au moment de l'exécution de l'instruction de la ligne /*d9*/ (respectivement /*d12*/).

Le sous-programme OS_killcard de traitement d'anomalie est ainsi mis en oeuvre, si, par exemple, au cours de l'étape de dépilement /*d7*/, on dépile une valeur différente de la valeur prédéterminée F1H.

On notera que dans ce mode de réalisation, la suppression de la valeur prédéterminée 05F1H de la pile d'exécution est effectuée après exécution du sous-programme "fonction_critique" et non pas suite à une attaque ayant lieu lors de l'exécution d'un autre sous-programme, cette attaque ayant pour conséquence l'exécution des lignes /*d6*/ à /*d13*/.

Cette implémentation permet donc de s'assurer que l'exécution des instructions des lignes /*d6*/ à /*d13*/ est effectuée après l'exécution du sous-programme "fonction_critique".

Les lignes /*d14*/ et /*d15*/ terminent le programme de l'annexe D.

**L'annexe E** comporte 28 lignes d'instructions numérotées /*e1*/ à /*e28*/ d'un programme informatique dont l'exécution est sécurisée par un procédé de sécurisation conforme à l'invention dans un mode préféré de réalisation.

Les lignes /*e1*/ à /*e5*/ et /*e12*/ à /*e28*/ sont respectivement similaires aux lignes /*d1*/ à /*d5*/ et /*d16*/ à /*d32*/ décrites en référence à l'annexe D, à la différence près que l'on empile dans la pile d'instruction l'adresse de la fonction de traitement d'anomalie OS_killcard (lignes /*e20*/ et /*e21*/) au lieu de la valeur prédéterminée 05F1H.

Cette étape d'empilement est là aussi effectuée pendant l'exécution du sous-programme "fonction_critique".

Le programme de l'annexe E se branche donc à la ligne /*e5*/ à l'issue du sous-programme "fonction_critique".

Avant l'exécution de l'instruction de la ligne /*e5*/, les deux premières valeurs de la pile d'instructions sont normalement les adresses de poids faible et de poids fort de la fonction OS_killcard, ces valeurs prédéterminées ayant été empilées aux lignes /*e21*/ et /*e20*/.

Ces valeurs sont dépilées au cours de l'exécution des instructions des lignes /*e7*/ et /*e8*/_{.}

Ce mode de réalisation particulier permet de s'assurer que la fonction "fonction_critique" est exécutée après avoir été effectivement appelée, et non à la suite d'une attaque par génération de faute.

Dans le cas contraire en effet, le dépilement de l'adresse de la fonction OS_killcard, au moment inévitable du retour d'exécution d'un sous-programme, permettrait la détection d'une anomalie de d'exécution, notamment par la mise en oeuvre de cette fonction.

Les lignes /*e10*/ et /*e11*/ terminent le programme de l'annexe E.

**La** **figure 1** représente une carte à microcircuit 100 conforme à l'invention dans un mode préféré de réalisation.

Pour simplifier, seul le contenu du microcircuit est représenté, et ce de façon schématique.

De façon connue, la carte à microcircuit selon l'invention 100 comporte en outre des éléments matériels et logiciels classiques d'une carte à microcircuit, à savoir notamment un support en matière semi-rigide et des moyens d'alimentation. Ces éléments ne seront pas décrits ici.

La carte à microcircuit selon l'invention 100 comporte des moyens de mise en oeuvre d'un procédé de sécurisation tel que décrit précédemment en référence aux annexes A à E.

Dans le mode de réalisation préféré décrit ici, ces moyens sont constitués par un processeur 110, associé notamment à une mémoire non-volatile de type EEPROM, à une mémoire vive RAM comportant une pile d'instructions STACK, et à une mémoire morte ROM comportant un système d'exploitation OS.

La mémoire semi-volatile EEPROM comporte notamment les programmes des annexes A à E, ces programmes étant lus par le processeur 100 pour leur exécution.

La mémoire EEPROM comporte également les deux sous-programmes "anomalie" et "OS_killcard".

Lors de l'exécution des programmes des annexes A à E, les registres R6, R7 et test sont mémorisés dans la mémoire vive RAM.

Dans le mode de réalisation décrit ici, le registre A est l'accumuateur du processeur 110.

### ANNEXE A

| | | |
|---|---|---|
| /*a1*/ | ... | |
| /*a2*/ | #pragma asm | |
| /*a3*/ | push #00h | |
| /*a4*/ | push #01h | |
| /*a5*/ | #pragma endasm | |
| /*a6*/ | ... | |
| /*a7*/ | *...* | |
| -/*a8*/ | | if (test = VRAI) { |
| /*a9*/ | | #pragma asm |
| /*a10*/ | | push #00h |
| /*a11*/ | | push #02h |
| /*a12*/ | | #pragma endasm |
| /*a13*/ | | ... |
| /*a14*/ | | ... |
| /*a15*/ | | #pragma asm |
| /*a16*/ | | pop A |
| /*a17*/ | | XRL A,#02h |
| l*a18*/ | | JNZ anomalie |
| /*a19*/ | | pop A |
| /*a20*/ | | XRL A,#00h |
| /*a21*/ | | JNZ anomalie |
| /*a22*/ | | #pragma endasm |
| /*a23*/ | } | |
| /*a24*/ | ... | |
| /*a25*/ | ... | |
| /*a26*/ | #pragma asm | |
| /*a27*/ | pop A | |
| /*a28*/ | XRL A,#01h | |
| /*a29*/ | JNZ anomalie | |
| /*a30*/ | pop A | |
| /*a31*/ | XRL A,#00h | |
| /*a32*/ | JNZ anomalie | |
| /*a33*/ | #pragma endasm | |

### ANNEXE B

| | |
|---|---|
| /*b1*/ | void function(void) |
| /*b2*/ | { |
| /*b3*/ | ... |
| /*b4*/ | #pragma asm |
| /*b5*/ | push #HIGH(OS_killcard) |
| /*b6*/ | push #LOW(OS_killcard) |
| /*b7*/ | #pragma endasm |
| /*b8*/ | ... |
| /*b9*/ | fonction_critique(); |
| /*b10*/ | ... |
| /*b11*/ | } |
| | |
| /*b12*/ | void fonction_critique(void) |
| /*b13*/ | { |
| /*b14*/ | ... |
| /*b15*/ | #pragma asm |
| /*b16*/ | pop A |
| /*b17*/ | mov R7,A |
| /*b18*/ | pop A |
| /*b19*/ | mov R6,A |
| /*b20*/ | pop A |
| /*b21*/ | pop A |
| /*b22*/ | mov A,R6 |
| /*b23*/ | push A |
| /*b24*/ | mov A,R7 |
| /*b25*/ | push A |
| /*b26*/ | #pragma endasm |
| /*b27*/ | ... |
| /*b28*/ | } |

### ANNEXE C

| | |
|---|---|
| /*c1*/ | void function1(void) |
| /*c2*/ | { |
| /*c3*/ | ... |
| /*c4*/ | #pragma asm |
| /*c5*/ | push #05h |
| /*c6*/ | push #F1h |
| /*c7*/ | #pragma endasm |
| /*c8*/ | ... |
| /*c9*/ | fonction_critique(); |
| /*c10*/ | ... |
| /*c11*/ | } |
| | |
| /*c12*/ | void fonction_critique(void) |
| /*c13*/ | { |
| /*c14*/ | ... |
| /*c15*/ | #pragma asm |
| /*c16*/ | pop A |
| /*c17*/ | mov R7,A |
| /*c18*/ | pop A |
| /*c19*/ | mov R6,A |
| /*c20*/ | pop A |
| /*c21*/ | XRL A, #F1h |
| /*c22*/ | JNZ OS_killcard |
| /*c23*/ | pop A |
| /*c24*/ | XRL A, #05h |
| /*c25*/ | JNZ OS_killcard |
| /*c26*/ | mov A,R6 |
| /*c27*/ | push A |
| /*c28*/ | mov A,R7 |
| /*c29*/ | push A |
| /*c30*/ | #pragma endasm |
| /*c31*/ | ... |
| /*c32*/ | } |

### ANNEXE D

| | |
|---|---|
| /*d1*/ | void function(void) |
| /*d2*/ | { |
| /*d3*/ | ... |
| /*d4*/ | fonction_critique(); |
| /*d5*/ | ... |
| /*d6*/ | #pragma asm |
| /*d7*/ | pop A |
| /*d8*/ | XRL A, #F1h |
| /*d9*/ | JNZ OS_killcard |
| /*d10*/ | pop A |
| /*d11*/ | XRL A, #05h |
| /*d12*/ | JNZ OS_killcard |
| /*d13*/ | #pragma endasm |
| /*d14*/ | ... |
| /*d15*/ | } |
| | |
| /*d16*/ | void fonction_critique(void) |
| /*d17*/ | { |
| /*d18*/ | ... |
| /*d19*/ | #pragma asm |
| /*d20*/ | pop A |
| /*d21*/ | mov R7,A |
| /*d22*/ | pop A |
| /*d23*/ | mov R6,A |
| /*d24*/ | push #05h |
| /*d25*/ | push #F1h |
| /*d26*/ | mov A,R6 |
| /*d27*/ | push A |
| /*d28*/ | mov A,R7 |
| /*d29*/ | push A |
| /*d30*/ | #pragma endasm |
| /*d31*/ | ... |
| /*d32*/ | } |

### ANNEXE E

| | |
|---|---|
| /*e1*/ | void function(void) |
| /*e2*/ | { |
| /*e3*/ | ... |
| /*e4*/ | fonction_critique() |
| /*e5*/ | ... |
| /*e6*/ | #pragma asm |
| /*e7*/ | pop A |
| /*e8*/ | pop A |
| /*e9*/ | #pragma endasm |
| /*e10*/ | ... |
| /*e11*/ | } |
| | |
| /*e12*/ | void fonction_critique(void) |
| /*e13*/ | { |
| /*e14*/ | ... |
| /*e15*/ | #pragma asm |
| /*e16*/ | pop A |
| /*e17*/ | mov R7 ,A |
| /*e18*/ | pop A |
| /*e19*/ | mov R6,A |
| /*e20*/ | push #HIGH(OS_killcard) |
| /*e21*/ | push #LOW(OS_killcard) |
| /*e22*/ | mov A, R6 |
| /*e23*/ | push,A |
| /*e24*/ | mov A, R7 |
| /*e25*/ | push A |
| /*e26*/ | #pragma endasm |
| /*e27*/ | ... |
| /*e28*/ | } |

## Revendications

1. Procédé de sécurisation de l'exécution d'un programme informatique, le procédé étant **caractérisé en ce qu'**il comporte :
- une étape d'empilement d'une valeur prédéterminée dans une pile d'instructions du programme, ladite valeur prédéterminée étant l'adresse d'une fonction de traitement d'une anomalie ;
- lors de l'exécution normale du programme, une étape de suppression de ladite valeur prédéterminée de la pile d'instruction, sans exécution de la fonction de traitement d'une anomalie et
- une étape de dépilement de ladite pile, au cours de laquelle, si ladite valeur prédéterminée est dépilée, la fonction de traitement d'une anomalie est exécutée.

2. Procédé de sécurisation selon la revendication 1, **caractérisé en ce que** lesdites étapes d'empilement et de dépilement sont respectivement associées à des éléments d'au moins un sous-ensemble d'instructions dudit programme.

3. Procédé de sécurisation selon la revendication 2, **caractérisé en ce que** lesdits éléments sont respectivement une parenthèse ouvrante et une parenthèse fermante dans un système de parenthèses.

4. Procédé de sécurisation selon la revendication 2, **caractérisé en ce que** ladite étape de dépilement est associée à une instruction de retour d'exécution dudit programme ou d'un sous-programme dudit programme.

5. Procédé de sécurisation selon l'une quelconque des revendications 1 à 4, **caractérisé en ce que** ledit programme est écrit dans un langage de programmation, ce langage comportant une première instruction dont l'exécution met en oeuvre ladite étape d'empilement et/ou une deuxième instruction dont l'exécution met en oeuvre ladite étape de dépilement.

6. Procédé de sécurisation selon la revendication 5, **caractérisé en ce que** la deuxième instruction termine ledit programme ou un sous-programme dudit programme.

7. Procédé de sécurisation selon l'une quelconque des revendications 1 à 6, **caractérisé en ce que** ladite valeur prédéterminée est représentative d'un sous-ensemble d'instructions critiques dudit programme.

8. Procédé de sécurisation selon l'une quelconque des revendications 1 à 7, dans lequel ledit programme comporte au moins un appel à un sous-programme, **caractérisé en ce que** ladite étape d'empilement est effectuée avant ledit appel, et **en ce qu'**on supprime ladite valeur prédéterminée de ladite pile pendant l'exécution dudit sous-programme.

9. Procédé de sécurisation selon l'une quelconque des revendications 1 à 7, dans lequel ledit programme comporte au moins un appel à un sous-programme, **caractérisé en ce que** ladite étape d'empilement est effectuée pendant l'exécution dudit sous-programme, et **en ce qu'**on supprime ladite valeur prédéterminée de ladite pile après l'exécution dudit sous-programme.

10. Procédé se sécurisation selon l'une quelconque des revendications 1 à 9, dans lequel la fonction de traitement d'une anomalie est une fonction de destruction d'un système d'exploitation.

11. Support d'informations lisible par un système informatique, éventuellement totalement ou partiellement amovible, notamment CD-ROM ou support magnétique, tel un disque dur ou une disquette, ou support transmissible tel un signal électrique ou optique, **caractérisé en ce qu'**il comporte des instructions d'un programme informatique permettant la mise en oeuvre d'un procédé de sécurisation selon l'une quelconque des revendications 1 à 10, lorsque ce programme est chargé et exécuté par un système informatique.

12. Programme d'ordinateur stocké sur un support d'informations, ledit programme comportant des instructions permettant la mise en oeuvre d'un procédé de sécurisation selon l'une quelconque des revendications 1 à 10, lorsque ce programme est chargé et exécuté par un système informatique.

13. Entité électronique sécurisée, **caractérisée en ce qu'**elle comporte des moyens de mise en oeuvre d'un procédé de sécurisation selon l'une quelconque des revendications 1 à 10.

14. Entité électronique selon la revendication 13, **caractérisée en ce qu'**elle est une carte à microcircuit.

## Patentansprüche

1. Verfahren zur Durchführung einer sicheren Ausführung eines Computerprogramms, wobei das Verfahren **dadurch gekennzeichnet ist, dass** es Folgendes umfasst:
- einen Schritt des Stapelns eines vorausbestimmten Wertes in einem Anweisungsstapel des Programms, wobei der vorausbestimmte Wert die Adresse einer Funktion zur Verarbeitung einer Anomalie ist;
- bei normaler Ausführung des Programms einen Schritt des Löschens des vorausbestimmten Wertes aus dem Anweisungsstapel, ohne Ausführung der Funktion zur Verarbeitung einer Anomalie und
- einen Schritt des Entstapelns des Stapels, währenddessen, wenn der vorausbestimmte Wert entstapelt wird, die Funktion zur Verarbeitung einer Anomalie ausgeführt wird.

2. Verfahren zur Durchführung einer sicheren Ausführung nach Anspruch 1, **dadurch gekennzeichnet, dass** die Schritte des Stapelns und Entstapelns jeweils mit Elementen aus wenigstens einer Untereinheit von Anweisungen des Programms verbunden sind.

3. Verfahren zur Durchführung einer sicheren Ausführung nach Anspruch 2, **dadurch gekennzeichnet, dass** die Elemente jeweils eine öffnende Klammer und eine schließende Klammer in einem Klammersystem sind.

4. Verfahren zur Durchführung einer sicheren Ausführung nach Anspruch 2, **dadurch gekennzeichnet, dass** der Schritt des Entstapelns mit einer Rücksprunganweisung zur Ausführung des Programms oder eines Unterprogramms des Programms verbunden ist.

5. Verfahren zur Durchführung einer sicheren Ausführung nach einem der Ansprüche 1 bis 4, **dadurch gekennzeichnet, dass** das Programm in einer Programmiersprache geschrieben ist, wobei diese Sprache eine erste Anweisung umfasst, deren Ausführung den Schritt des Stapelns einleitet, und/oder eine zweite Anweisung, deren Ausführung den Schritt des Entstapelns einleitet.

6. Verfahren zur Durchführung einer sicheren Ausführung nach Anspruch 5, **dadurch gekennzeichnet, dass** die zweite Anweisung das Programm oder ein Unterprogramm des Programms beendet.

7. Verfahren zur Durchführung einer sicheren Ausführung nach einem der Ansprüche 1 bis 6, **dadurch gekennzeichnet, dass** der vorausbestimmte Wert für eine Untereinheit kritischer Anweisungen des Programms bezeichnend ist.

8. Verfahren zur Durchführung einer sicheren Ausführung nach einem der Ansprüche 1 bis 7, wobei das Programm wenigstens einen Aufruf eines Unterprogramms umfasst, **dadurch gekennzeichnet, dass** der Schritt des Stapelns vor dem Aufruf ausgeführt wird, und dadurch, dass der vorausbestimmte Wert des Stapels während der Ausführung des Unterprogramms gelöscht wird.

9. Verfahren zur Durchführung einer sicheren Ausführung nach einem der Ansprüche 1 bis 7, wobei das Programm wenigstens einen Aufruf eines Unterprogramms umfasst, **dadurch gekennzeichnet, dass** der Schritt des Stapelns während der Ausführung des Unterprogramms ausgeführt wird, und dadurch, dass der vorausbestimmte Wert des Stapels nach der Ausführung des Unterprogramms gelöscht wird.

10. Verfahren zur Durchführung einer sicheren Ausführung nach einem der Ansprüche 1 bis 9, wobei die Funktion zur Verarbeitung einer Anomalie eine Funktion zur Zerstörung eines Betriebssystems ist.

11. Informationsträger, der von einem Computersystem lesbar und eventuell vollständig oder teilweise herausnehmbar ist, insbesondere eine CD-ROM oder ein magnetischer Träger, wie etwa eine Festplatte oder Diskette, oder ein übertragbarer Träger, wie etwa ein elektrisches oder optisches Signal, **dadurch gekennzeichnet, dass** er Anweisungen eines Computerprogramms umfasst, die das Einleiten eines Verfahrens zur Durchführung einer sicheren Ausführung nach einem der Ansprüche 1 bis 10 ermöglichen, wenn das Programm von einem Computersystem geladen und ausgeführt wird.

12. Computerprogramm, das auf einem Informationsträger gespeichert ist, wobei das Programm Anweisungen umfasst, die das Einleiten eines Verfahrens zur Durchführung einer sicheren Ausführung nach einem der Ansprüche 1 bis 10 ermöglichen, wenn das Programm von einem Computersystem geladen und ausgeführt wird.

13. Gesicherte elektronische Einheit, **dadurch gekennzeichnet, dass** sie Mittel zum Einleiten eines Verfahrens zur Durchführung einer sicheren Ausführung nach einem der Ansprüche 1 bis 10 umfasst.

14. Elektronische Einheit nach Anspruch 13, **dadurch gekennzeichnet, dass** sie eine Chipkarte ist.

## Claims

1. Method for securing the execution of a computer program, the method being **characterised in that** it includes:
- a step of stacking a predetermined value in an instruction stack of the program, said predetermined value being the address of an anomaly processing function;
- during normal execution of the program, a step of suppressing said predetermined value of the instruction stack without executing the anomaly processing function, and
- a step of unstacking said stack, during which, if said predetermined value is unstacked, the anomaly processing function is executed.

2. Securing method according to claim 1, **characterised in that** said stacking and unstacking steps are respectively associated with elements of at least one subset of instructions of said program.

3. Securing method according to claim 2, **characterised in that** said elements are respectively an opening bracket and a closing bracket in a system of brackets.

4. Securing method according to claim 2, **characterised in that** said unstacking step is associated with a return execution instruction of said program or a subroutine of said program.

5. Securing method according to any of claims 1 to 4, **characterised in that** said program is written in a programming language including a first instruction whose execution implements said stacking step and/or a second instruction whose execution implements said unstacking step.

6. Securing method according to claim 5, **characterised in that** the second instruction terminates said program or a subroutine of said program.

7. Securing method according to any of claims 1 to 6, **characterised in that** said predetermined value is representative of a subset of critical instructions of said program.

8. Securing method according to any of claims 1 to 7, wherein said program includes at least one call to a subroutine, **characterised in that** said stacking step is effected before said call and **in that** said predetermined value is eliminated from said stack during execution of said subroutine.

9. Securing method according to any of claims 1 to 7, wherein said program includes at least one call to a subroutine, **characterised in that** said stacking step is effected during execution of said subroutine, and **in that** said predetermined value is eliminated from said stack after execution of said subroutine.

10. Securing method according to any of claims 1 to 6, wherein the anomaly processing function is a function for destroying an operating system.

11. Information medium readable by a computer system, and where appropriate totally or partially removable, in particular a CD-ROM, or a magnetic medium, such as a hard disk or floppy disk, or a transmissible medium such as an electrical or optical signal, **characterised in that** it includes instructions of a computer program for implementing a securing method according to any of claims 1 to 10 when this program is loaded into and executed by a computer system.

12. Computer program stored on an information medium, said program including instructions for executing a securing method according to any of claims 1 to 10 when this program is loaded into and executed by a computer system.

13. Secured electronic device, **characterised in that** it includes means for implementing a securing method according to any of claims 1 to 10.

14. Electronic device according to claim 13, **characterised in that** it is a smart card.
